# EUROPÄISCHE PATENTSCHRIFT

(11) **EP 2 806 317 B1**
(45) Veröffentlichungstag und Bekanntmachung des Hinweises auf die Patenterteilung: **14.11.2018**
(21) Anmeldenummer: 14169172.5
(22) Anmeldetag: 20.05.2014
(51) Int. Cl.: G05B 9/02, G05B 19/042

(54) **Verfahren und elektrischen Einrichtung mit einer Schaltungsanordnung zur Aktivierung und Parametrisierung der elektrischen Einrichtung**
Method and electric device with a circuit for the activation and parameterising of the electrical device
Procédé et dispositif électrique avec un circuit destiné à l'activation et au paramétrage du dispositif électrique

(30) Priorität: 24.05.2013 DE 102013008807
(43) Veröffentlichungstag der Anmeldung: 26.11.2014
(73) Patentinhaber: Balluff GmbH, 73765 Neuhausen a.d.F. (DE)
(72) Erfinder: Kohler, Matthias, CH-3702 Hondrich (CH); Mahler, Simon, CH-3014 Bern (CH); Reißing, Tobias, CH-2560 Nidau (CH)
(74) Vertreter: Jakelski & Althoff Patentanwälte PartG mbB

(56) Entgegenhaltungen:
- EP-A1- 2 560 208
- DE-U1-202004 021 345

## Beschreibung

Die Erfindung betrifft ein Verfahren und eine elektrische Einrichtung zur Aktivierung und Parametrisierung einer elektrischen Einrichtung nach der Gattung der unabhängigen Ansprüche.

### Stand der Technik

Die DE 20 2004 021 345 U1 offenbart eine elektrische Einrichtung in Form eines Kochfeldes, welches ein berührungssensitives Bedienfeld aufweist. Dabei werden Stellgrößen in einem ersten Bedienmodus in Abhängigkeit von einer Berührungsposition auf einem ortssensitiven Näherungssensorfeld eingestellt. Die Bedienanordnung weist zumindest ein Anwahlfeld zum Umschalten von dem ersten Bedienmodus in zumindest einen zweiten Bedienmodus auf.

Die EP 2 560 208 A1 betrifft einen optoelektrischen Sensor sowie ein Verfahren zur Positionserkennung eines Objekts. Bei diesem Verfahren wird eine Positionserkennung des Objekts durch folgende Schritte realisiert:
Aussenden von Licht mittels der Lichtquelle einer Sensorvorrichtung, Detektieren der lateralen Position eines von dem Objekt reflektierten Lichtstrahls mittels des optoelektronischen Sensors der Sensorvorrichtung und Berechnen des Abstandes zwischen der Sensorvorrichtung und dem Objekt aus der lateralen Position des reflektierten Lichtstrahls.

Zum Schutz vor unbeabsichtigter Betätigung werden Sensoren, die über eine sogenannte Teach-In-Taste verfügen, mit einem Zeitschloss ausgestattet. Bei den Sensoren der Anmelderin muss beispielsweise ein Teach-In-Drucktaster zunächst eine gewisse Zeit, beispielsweise drei Sekunden, gedrückt gehalten werden, bevor die Teach-In-Funktionalität startet. "Teach-In" bedeutet dabei, gewisse Konfigurationen des Sensors, das heißt die Eingabe von beispielsweise Randwerten, Parametern und dergleichen nach dessen Fertigstellung von außerhalb vorzunehmen.

Darüber hinaus existierten Sensoren, welche eine Parametrisierung über eine sogenannte IO-Link-Schnittstelle ermöglichen. Einige dieser Sensoren verfügen neben der IO-Schnittstelle auch über eine lokale Parametrisierungsmöglichkeit, zum Beispiel ein Potentiometers. Durch die IO-Link-Schnittstelle ist eine Mehrzahl von Einstellmöglichkeiten realisierbar. Eine IO-Link-Schnittstelle bietet z.B. die Möglichkeit, beispielsweise einem Sensor eine Schaltschwelle direkt als Wert zuzuordnen. Möglich ist darüber hinaus auch ein "Teach-In" über die IO-Link-Schnittstelle. Verfügt ein solcher Sensor neben einer IO-Link-Schnittstelle nun auch beispielsweise über ein Potentiometer, um z.B. Schaltschwellen einzustellen, kann dies zu Synchronisationsproblemen beider Einstellmöglichkeiten führen. Wenn nämlich beispielsweise über die IO-Link-Schnittstelle eine neue Schaltschwelle übertragen wird und gleichzeitig die Position eines Potentiometers oder eines Drehstellers oder auch eines Linearstellers unverändert beibehalten wird, stimmt nach Übertragen der Schaltschwelle via Datenübermittlung über die IO-Link-Schnittstelle oder einem erfolgreichen IO-Link-Teach-In-Vorgang die Position des Potentiometers oder des Linear- oder Drehstellers nicht mehr mit der Schaltschwelle überein. In diesem Falle können der Linearsteller, Drehsteller oder das Potentiometer die Schaltstelle nicht mehr definieren.

### Offenbarung der Erfindung

Der Erfindung liegt nun die Aufgabe zugrunde, eine elektrische Einrichtung, beispielsweise einen Sensor der eingangs beschriebenen Art so weiterzubilden, dass ein wirkungsvoller Manipulationsschutz gegeben ist. Unter Manipulationsschutz wird dabei ein Schutz vor unbeabsichtigter Betätigung des elektrischen Bauelements eines solchen Sensors verstanden. Darüber hinaus soll auch eine Synchronisation zwischen einer Einstellung eines Wertes mittels des elektrischen Bauelements und einer Parametrisierung beispielsweise mittels IO-Link ermöglicht werden.

### Vorteile der Erfindung

Diese Aufgabe wird durch ein Verfahren und eine elektrische Einrichtung der eingangs genannten Art mit den Merkmalen der unabhängigen Ansprüche 1 und 6 gelöst.
Grundidee der Erfindung ist es, ein ohnehin vorhandenes elektrisches Bauelement mit analogem oder binärem Ausgangssignal, dessen Werte welche durch analoge oder digitale elektrische Signale gebildet werden und durch Manipulation, beispielsweise Drehen, Verschieben, Berühren, Drücken und dergleichen veränderbar sind, nicht nur zur Aktivierung einer elektrischen Einrichtung in Form eines Sensors zu verwenden, sondern auch zur Einstellung dessen Schwellenwerts zu verwenden. Dabei werden ein erster und ein zweiter Schwellenwert vorgegeben, die beispielsweise durch Drehen oder Verschieben oder Drücken, Berühren und dergleichen des elektrischen Bauelements erreichbar sind. Nach Erreichen des ersten Schwellenwerts startet ein Zeitfenster, innerhalb dessen der zweite Schwellenwert erreicht werden muss. Wird der zweite Schwellenwert innerhalb des Zeitfensters erreicht, wird davon ausgegangen, dass eine Aktivierung erfolgen soll und es wird ein Aktivierungssignal ausgegeben. Das einstellbare elektrische Bauelement wird also nicht nur beispielsweise zur Einstellung von Werten des Sensors verwendet, sondern auch zur Aktivierung und darüber hinaus - wie weiter unten noch ausgeführt wird - auch zur Parametrisierung. Wenn die zweite Schaltschwelle nicht innerhalb des vorgebbaren Zeitfensters durch Manipulation des elektrischen Bauelements erreicht wird, wird der Aktivierungsvorgang abgebrochen. Hierdurch ist nicht nur eine Aktivierung, sondern auch eine Parametrisierung bzw. eine Modusfestlegung des Sensors auch nach Fertigstellung, also beispielsweise im vergossenen Zustand der elektrischen Einrichtung noch möglich ist. Dabei wird ein elektrisches Bauelement verwendet, das ohnehin beispielsweise zur Einstellung eines Schaltwertes oder dergleichen vorhanden ist. Ein zusätzlicher Hardwareaufwand ist also nicht erforderlich.

Durch die in den abhängigen Ansprüchen aufgeführten Maßnahmen sind vorteilhafte Weiterbildungen und Verbesserungen des in den unabhängigen Ansprüchen angegebenen Verfahrens und der Schaltungsanordnung möglich. So kommt als elektrisches Bauelement zweckmäßigerweise eines der folgenden Bauelemente zur Anwendung: Drehsteller, Linearsteller, Drehpotentiometer, Schiebepotentiometer, Drehkondensator. All diese Bauelemente sind geeignet, um durch Drehen oder Verschieben, Drücken oder Berühren oder sonstige Manipulationen unterschiedliche Werte einzustellen, wobei unter Werten elektrische Signale verstanden werden, die von dem Bauelement in analoger oder digitaler Form ausgegeben werden und die eine Dreh- oder Linearposition repräsentieren.

Das Zeitfenster wird vorteilhafterweise mittels einer Timerschaltung realisiert. Vorteilhafterweise ist vorgesehen, dass bei Erreichen des ersten Schwellenwerts ein erstes Signal, beispielsweise ein Lichtsignal, ausgegeben wird und dass bei Erreichen des zweiten Schwellenwerts innerhalb des vorgegebenen Zeitfensters ein zweites Signal ausgegeben wird. Diese Signale signalisieren eine erfolgreiche Aktivierung der elektrischen Einrichtung. Nach längerer Nichtbetätigung der Einrichtung erfolgt eine Verriegelung der elektrischen Einrichtung.

Das erfindungsgemäße Verfahren kann darüber hinaus auch zur Parametrisierung einer elektrischen Einrichtung dienen. In diesem Falle kann durch entsprechendes Einstellen des elektrischen Bauelements durch Verschieben oder Drehen in vorgegebene Richtungen und um vorgegebene Winkel/Längen eine Endparametrisierung oder eine (Betriebs-)Modusfestlegung des Sensors erreicht werden.

Als Sensor kommen rein prinzipiell die unterschiedlichsten Sensoren in Frage. So kann der Sensor beispielsweise ein Näherungssensor oder ein Distanzsensor sein, also ein Sensor, der auf eine Annäherung eines Objektes reagiert bzw. der die Distanz eines Objektes bestimmt. Der Sensor kann auch ein Temperatursensor, ein Drucksensor oder ein Feuchtigkeitssensor oder ein anderer Sensor zur Erfassung physikalischer Größen sein.

### Kurze Beschreibung der Zeichnungen

Ausführungsbeispiele der Erfindung sind in den Zeichnungen dargestellt und in der nachfolgenden Beschreibung näher erläutert.

Es zeigen:
- Fig. 1: schematisch eine Schaltungsanordnung zur Aktivierung einer elektrischen Einrichtung;
- Fig. 2.1 - 2.3: Ablaufdiagramme von Ausführungsformen des erfindungsgemäßen Verfahrens;
- Fig. 3: jeweils der Einstellwert über der Zeit eines Drehpotentiometers zur Erläuterung des erfindungsgemäßen Verfahrens und
- Fig. 4: ein Ablaufdiagramm einer Ausgestaltung des erfindungsgemäßen Verfahrens zur Parametrisierung und Modusfestlegung einer elektrischen Einrichtung in Form eines Sensors.

### Ausführungsform der Erfindung

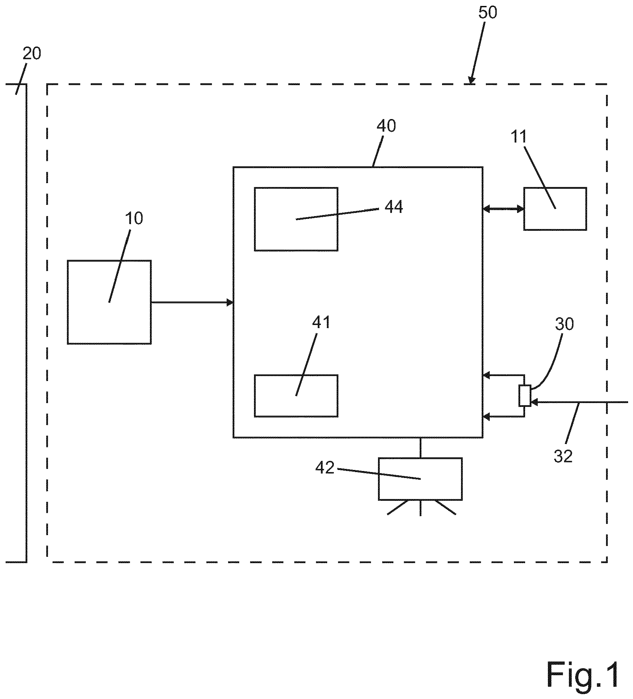

Eine Schaltungsanordnung 40, dargestellt in Figur 1, weist beispielsweise eine IO-Link-Schnittstelle 11 auf, über die beispielsweise Parameterdaten in einen Speicher 44 der Schaltungsanordnung 40, die ihrerseits Teil einer elektrischen Einrichtung 50 ist, gespeichert werden können. Die elektrische Einrichtung 50 umfasst ferner beispielsweise ein Sensorelement 10, das ein Signal ausgibt, wenn der Sensor - wie beispielhaft dargestellt - ein Näherungssensor ist und vor ihm ein Target 20 angeordnet ist. Die Erfindung wird nachfolgend in Verbindung mit einem solchen Näherungssensor beschrieben. Es ist aber hervorzuheben, dass die Erfindung nicht auf einen Näherungssensor beschränkt ist, sondern rein prinzipiell bei beliebigen Sensoren, beispielsweise Temperatursensoren, Drucksensoren oder anderen praktisch beliebigen Sensoren, die physikalische Größen erfassen, eingesetzt werden kann.

Die Schaltungsanordnung 40 dient der Auswertung der Sensorsignale sowie der Steuerung des Sensorelements 10. Die elektrische Einrichtung 50 weist ferner ein elektrisches Bauelement 30 auf, dessen Werte beispielsweise durch Drehen oder Verschieben, Drücken, Berühren oder sonstige Manipulationen veränderbar sind. Dieses Bauelement 30 kann zum Beispiel ein Potentiometer sein, das von außerhalb einstellbar ist, was schematisch durch die Linie 32 symbolisiert werden soll. Die elektronische Schaltungsanordnung 40 weist neben einer Auswerteeinrichtung der Sensorausgangssignale auch eine Timerschaltung 41 auf, auf die nachfolgend noch näher eingegangen wird, sowie eine Leuchtdiode 42.

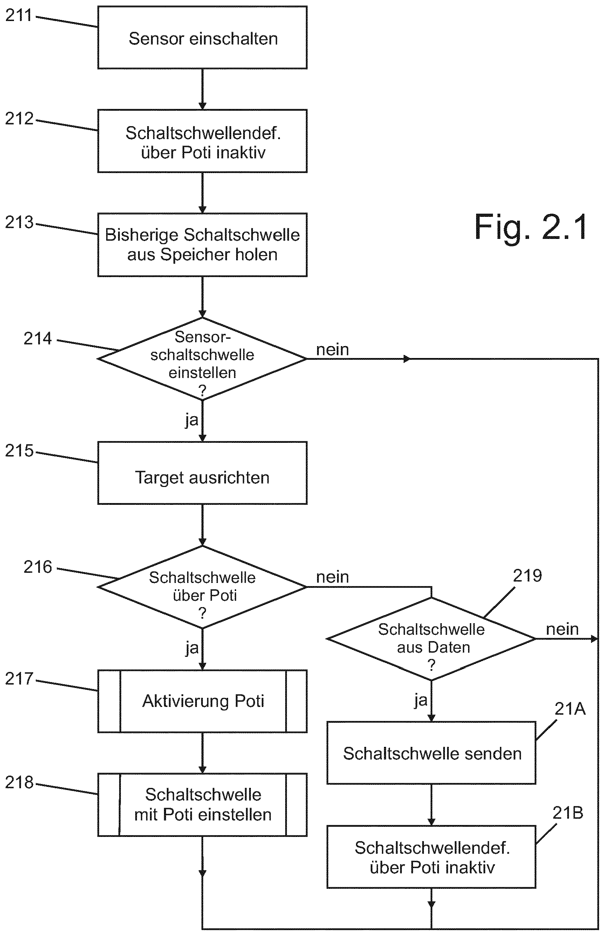

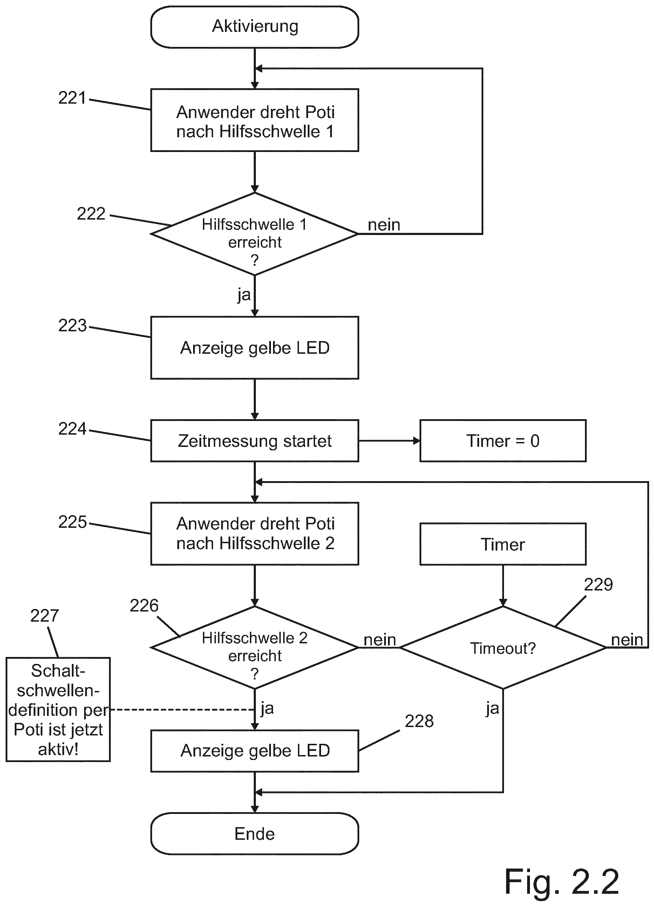

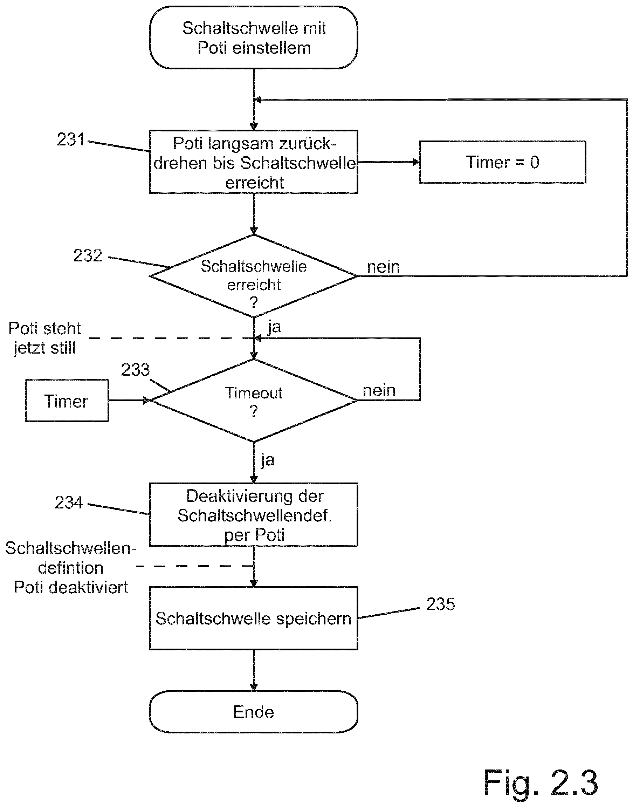

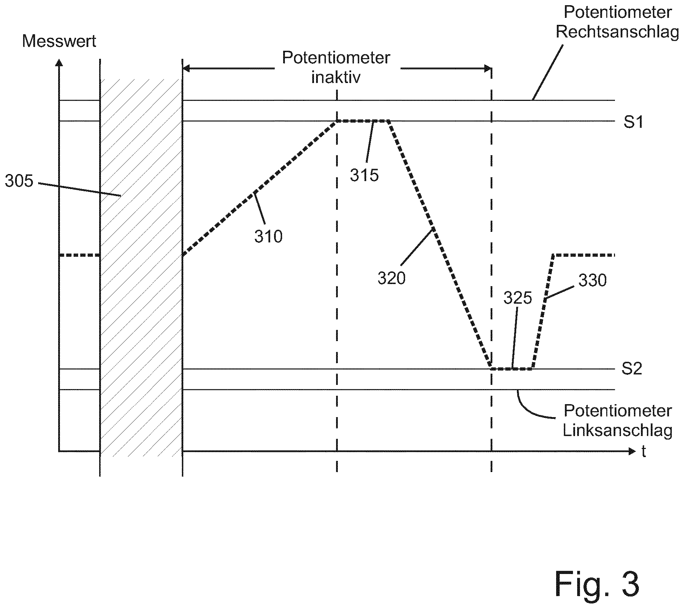

In Verbindung mit Figur 2 und Figur 3 wird nun eine Ausführungsform eines erfindungsgemäßen Verfahrens anhand der Einstellung einer Schaltschwelle der elektrischen Einrichtung 50 erläutert.

Zunächst wird in Schritt 211 die elektrische Einrichtung 50 eingeschaltet bzw. es wird die Versorgungsspannung eingeschaltet. In Schritt 212 ist zunächst eine Schaltschwellendefinition über das elektrische Bauelement (Potentiometer) 30 inaktiv. In Schritt 213 wird daher die bisherige Schaltschwelle aus dem Speicher 44 gelesen. In Schritt 214 wird abgefragt, ob eine Schaltschwelleneinstellung erfolgen soll. Ist dies der Fall, wird zunächst in einem Schritt 215 ein Schaltabstand in Bezug auf das Target 20 neu justiert. Die Schaltschwelle kann über das elektrische Bauelement 30, vorliegend ein Potentiometer, oder anderweitig, beispielsweise auf Grund einer Datenübertragung mittels der IO-Link Schnittstelle 11 neu eingestellt werden. Ansonsten wird die bisherige Schaltschwelle beibehalten. In Schritt 216 wird abgefragt, ob eine Schaltschwellendefinition über das elektrische Bauelement 30 erfolgen soll. Ist dies der Fall, führt der Anwender in Schritt 217 zunächst einen Aktivierungsvorgang zur Anwendung des elektrischen Bauelements 30 zur Schaltschwellendefinition durch. Nach der Aktivierung des elektrischen Bauelements 30 kann dieses in Schritt 218 verwendet werden, um die Schaltschwelle des Sensorelements 10 zu definieren. Ansonsten wird eine Schaltschwelle anderweitig zugeführt, beispielsweise auf Grund einer Datenübertragung mittels der IO-Link Schnittstelle 11 in Schritt 21A (in Figur 3 ist dieser Bereich mit Bezugszeichen 305 bezeichnet), woraufhin in Schritt 21B die Schaltschwellendefinition über das Potentiometer 30 deaktiviert wird. Die vorstehend beschriebenen Verfahrensschritte können durch eine Schwellenwerteinrichtung, die beispielsweise als Schaltung ausgebildet ist, oder aber auch als Computerprogramm in einem entsprechenden Rechner-Bauteil realisiert sein.

Figur 2.2 zeigt das Verfahren zur Aktivierung des elektrischen Bauelements 30 zur Schaltschwellendefinition des Sensorelements 10. Das elektrische Bauelement in Form eines Drehpotentiometers 30 wird in Schritt 221 hin zu einer ersten Schwelle S1 gedreht (In Figur 3 ist dies mit Bezugszeichen 310 gekennzeichnet). In Schritt 222 wird geprüft, ob die Schwelle S1 erreicht ist. Wenn in Schritt 222 festgestellt wird, dass die Schwelle S1 erreicht wurde (in Figur 3 ist dies mit Bezugszeichen 315 gekennzeichnet), wird ein Signal (beispielsweise ein Lichtsignal) ausgegeben, Schritt 223. Der Vorgang wird durch eine beispielsweise blinkende (gelbe) Leuchtdiode 42 angezeigt, die dem Anwender signalisiert, dass die Schaltschwellendefinition über das Potentiometer 30 nun bereit ist und auf weitere Bedienung wartet. Für die weitere Bedienung hat der Anwender ein vorgebbares Zeitfenster zur Verfügung, zu dessen Messung in Schritt 224 der Timer zurückgesetzt wird. Die weitere Bedienung ist das Weiterdrehen bzw. Zurückdrehen des Potentiometers in Schritt 225 (in Figur 3 ist dies mit Bezugszeichen 320 bezeichnet). In Schritt 226 wird geprüft, ob eine zweite Schwelle S2 durch Rückdrehen des Potentiometers erreicht ist. Wenn dies nicht der Fall ist, wird in Schritt 229 geprüft, ob ein Time-out vorliegt, d.h. es wird geprüft, ob das zum Erreichen der Schwelle S2 zur Verfügung gestellte Zeitfenster abgelaufen ist. Wenn das Zeitfenster abgelaufen ist, ohne dass die zweite Schwelle S2 erreicht wurde, wird die Schaltschwellendefinition des elektrischen Bauelements 30 wieder deaktiviert. Wird dagegen in Schritt 226 erkannt, dass die zweite Schwelle S2 innerhalb des Zeitfensters erreicht wurde, wird das elektrische Bauelement 30 umfassend zur Schaltschwellenbestimmung aktiviert (Schritt 227). Auch dieser Betriebszustand wird durch ein Lichtsignal der Leuchtdiode 42 signalisiert (Schritt 228). Der Sensor ist zur Einstellung der Schaltschwelle mittels des elektrischen Bauelements, also vorliegend des Potentiometers 30, bereit.

Figur 2.3 zeigt das Verfahren zur Einstellung der Schaltschwelle, der Sensor ist zur Einstellung der Schaltschwelle mit dem Potentiometer bereit. In diesem Falle wird das Potentiometer langsam zurückgedreht (Schritt 231), in Figur 3 mit 330 bezeichnet, bis eine Schaltschwelle erreicht ist (Schritt 232). Solange das Potentiometer zur Schaltschwellendefinition gedreht wird, wird die Zeitmessung des Timers 41 fortwährend zurückgesetzt (Schritt 233). Ist dagegen die Schaltschwelle erreicht und wird das Potentiometer nicht mehr gedreht, beginnt die Zeitmessung des Timers 41. Ist nämlich das Potentiometer aktiviert und wird das Potentiometer für eine bestimmte Zeitdauer, die einstellbar und vorgebbar ist und beispielsweise 1 bis 5 Minuten beträgt, nicht mehr verwendet, wird das Potentiometer automatisch deaktiviert (Schritt 234). Der Wert des Potentiometers wird ausgelesen und als neue Schaltschwelle in dem Speicher 44 der Schaltungsanordnung 40 gespeichert (Schritt 235).

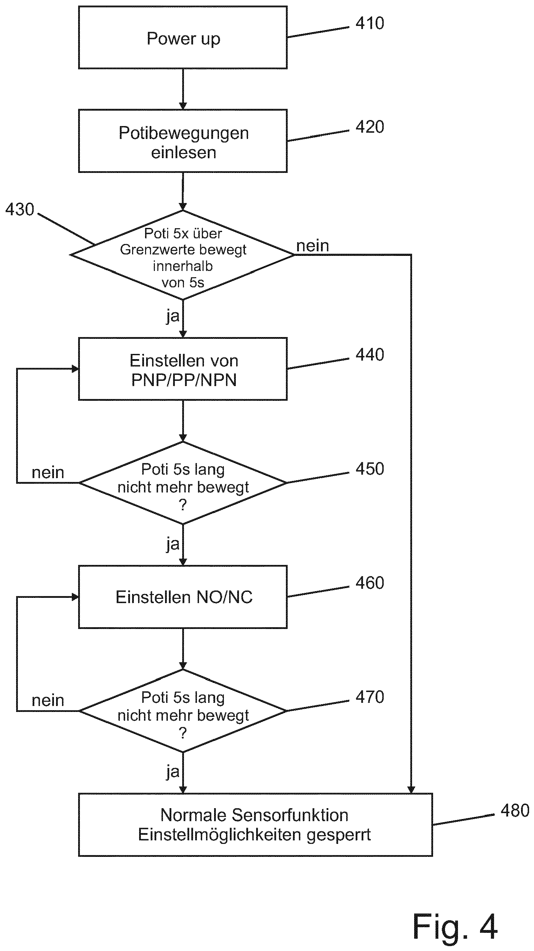

Das elektrische Bauelement 30, hier das Potentiometer, kann aber auch zur Parametrisierung der elektrischen Einrichtung 50 bzw. zur Festlegung deren Betriebsmodus eingesetzt werden, beispielsweise ob die elektrische Einrichtung 50 in einem PNP-/PP-/NPN-Modus (PP = Push-Pull) oder in einem NC- oder NO-Modus betrieben wird. Dies wird nachstehend in Verbindung mit Figur 4 beschrieben. Zunächst erfolgt in einem Schritt 410 ein Power-up, das heißt eine Spannungsversorgung des Sensors 10. Sodann werden in Schritt 420 die Bewegungen des elektrischen Bauelements 30 eingelesen und in Schritt 430 geprüft, ob beispielsweise das elektrische Bauelement 30 innerhalb einer vorgebbaren oder vorgegebenen (von vorneherein festgelegten) Zeitspanne (im Beispiel 5s) fünfmal über bzw. unter eine jeweils vorgebbare oder vorgegebene Schwelle gedreht oder geschoben wurde. Wenn dies der Fall ist, wird in Schritt 440 eine Aktivierung einer möglichen PNP-/PP-/NPN-Programmierung geschaltet. In Schritt 450 wird geprüft, ob das Potentiometer beispielsweise fünf Sekunden lang nicht mehr bewegt wurde. Wenn dies nicht der Fall ist, wird zurückgesprungen auf Schritt 440. Wenn dies jedoch der Fall ist, folgt in Schritt 460 eine Einstellung des NO-/NC-Modus. In Schritt 470 wird wiederum geprüft, ob das Potentiometer beispielsweise fünf Sekunden lang nicht mehr bewegt wurde. Wenn dies der Fall ist, wird in Schritt 480 die eingestellte Sensorfunktion übernommen und gleichzeitig die Einstellmöglichkeit gesperrt. Wenn dies nicht der Fall ist, wird zurückgesprungen auf Schritt 460, in der die Einstellung des (Betriebs-)Modus erfolgt. Diese Einstellvorgänge können beispielsweise mit einem Blinken der Leuchtdiode 42 oder einem Signal einer anderen Signaleinrichtung verbunden sein, sodass ein Bediener die Einstellvorgänge erkennen kann.

Der Vorteil des vorbeschriebenen Verfahrens und der Schaltungsanordnung sowie der Verwendung des Potentiometers oder ganz allgemein eines elektrischen Bauelements zur Aktivierung sowie zur Parametrisierung und Festlegung des Betriebsmodus ist, dass auch bereits fertiggestellte Sensoren von außen aktiviert werden können, wobei keine zusätzlichen Schalter oder zusätzliche Hardware, beispielsweise ein Tastschalter, vorgesehen sein müssen, sondern vielmehr ein elektrisches Bauelement, dessen Werte durch Drehen oder Verschieben änderbar sind und welches eigentlich zur Einstellung beispielsweise eines Schaltabstandes oder sensorspezifischer Werte dient, verwendet werden kann, um die elektrische Einrichtung 50 zu aktivieren oder um sie zu parametrisieren oder um ihren Betriebsmodus festzulegen.

## Patentansprüche

1. Verfahren zur Aktivierung einer elektrischen Einrichtung (50), welche wenigstens ein elektrisches Bauelement (30) aufweist, dessen Werte mechanisch durch Drehen, Verschieben, Drücken, Berühren oder sonstige Manipulationen veränderbar sind, wobei die Werte in analoger oder digitaler Form ausgegebene elektrische Signale sind, mit folgenden Schritten:
- es werden wenigstens ein erster und ein zweiter Schwellenwert vorgegeben
- nach Erreichen des ersten Schwellenwertes durch Manipulation des elektrischen Bauelements (30) startet ein Zeitfenster;
- wird der zweite Schwellenwert durch Manipulation des elektrischen Bauelements (30) innerhalb des Zeitfensters erreicht, wird ein Aktivierungssignal ausgegeben;
- wenn der zweite Schwellenwert nicht innerhalb des vorgebbaren Zeitfensters durch Manipulation des elektrischen Bauelements (30) erreicht wird, wird der Aktivierungsvorgang abgebrochen,
**dadurch gekennzeichnet, dass** die elektrische Einrichtung (50) ein Sensor ist, dessen Schaltwert mit Hilfe des elektrischen Bauelements (30) eingestellt wird.

2. Verfahren nach Anspruch 1, **dadurch gekennzeichnet, dass** der erste Schwellenwert durch eine erste Manipulation in eine Richtung erreicht wird und dass der zweite Schwellenwert durch eine zweite Manipulation in die gleiche oder entgegengesetzte Richtung erreicht wird.

3. Verfahren nach Anspruch 1 oder 2, **dadurch gekennzeichnet, dass** als elektrisches Bauelement (30) eines der folgenden Bauelemente verwendet wird: Drehsteller, Linearsteller, Drehpotentiometer, Schiebepotentiometer, Drehkondensator, Slider, Taster, berührungsempfindliches Schaltelement.

4. Verfahren nach einem der vorstehenden Ansprüche, **dadurch gekennzeichnet, dass** bei Erreichen des ersten Schwellenwerts ein erstes optisches und/oder akustisches und/oder elektrisches Signal ausgegeben wird und dass bei Erreichen des zweiten Schwellenwerts innerhalb des vorgebbaren Zeitfensters ein zweites optisches und/oder akustisches und/oder elektrisches Signal ausgegeben wird.

5. Verfahren nach einem der vorstehenden Ansprüche, **dadurch gekennzeichnet, dass** durch Drehen, Verschieben, Drücken, Berühren oder sonstige Manipulationen des elektrischen Bauelements (30) in einer vorgebbaren Weise eine Parametrisierung und/oder eine Bestimmung des Betriebsmodus der elektrischen Einrichtung (50) vorgenommen wird.

6. Elektrische Einrichtung (50), welche eine Schaltungsanordnung (40) zur Aktivierung und Parametrisierung einer elektrischen Einrichtung (50) und wenigstens ein elektrisches Bauelement (30) aufweist, dessen Werte durch Drehen, Verschieben, Drücken, Berühren oder sonstige Manipulationen veränderbar sind, wobei die Werte in analoger oder digitaler Form ausgegebene elektrische Signale sind, wobei die Schaltungsanordnung (40) eine Schwellenwerteinrichtung aufweist, welche eingerichtet ist, das Erreichen von wenigstens zwei vorgebbaren oder vorgegebenen durch Drehen, Verschieben, Drücken, Berühren oder sonstige Manipulationen des elektrischen Bauelements (30) erreichbaren Schwellenwerten zu detektieren und wobei die Schaltungsanordnung (40) eine Timer-Schaltung (41) aufweist, welche bei Erreichen des ersten Schwellenwerts ein vorgebbares oder vorgegebenes Zeitfenster startet und die bei Erreichen des zweiten Schwellenwertes innerhalb eines vorgebbaren Zeitfensters ein Signal ausgibt und eine Parametrisierung in Form einer Schaltschwelleneinstellung freigibt und die bei Überschreiten des vorgebbaren oder vorgegebenen Zeitfensters die Aktivierung abbricht, wenn der zweite Schwellenwert nicht erreicht wurde, **dadurch gekennzeichnet, dass** die elektrische Einrichtung (50) ein Sensor ist, dessen Schaltwert mit Hilfe des elektrischen Bauelements (30) einstellbar ist.

7. Elektrische Einrichtung (50) nach Anspruch 6, **dadurch gekennzeichnet, dass** das elektrische Bauelement (30) eines der folgenden Bauelemente ist: Drehsteller, Linearsteller, Drehpotentiometer, Schiebepotentiometer, Drehkondensator, Slider, Taster, berührungsempfindliches Schaltelement.

8. Elektrische Einrichtung (50) nach Anspruch 6, **dadurch gekennzeichnet, dass** der Sensor ein Näherungssensor, ein Distanzsensor, ein Temperatursensor, ein Drucksensor oder ein Feuchtigkeitssensor oder ein anderer Sensor zur Erfassung physikalischer Größen ist.

## Claims

1. A method for the activation of an electrical device (50), which comprises at least one electrical component (30) whose values are mechanically variable by rotating, displacing, pressing, touching or other manipulations, wherein the values are signals outputted in analog or digital form with the following steps:
- at least one first and one second threshold value are predetermined;
- a time window starts after reaching the first threshold value by manipulation of the electrical component (30);
- if the second threshold value is reached by manipulation of the electrical component (30) within the time window, an activation signal is output;
- if the second threshold value is not reached within the predeterminable time window by manipulation of the electrical component (30), the activation process is terminated,
**characterized in that** the electronic device (50) is a sensor whose switching value is adjustable by means of the electrical component (30).

2. The use according to claim 1, **characterized in that** the first threshold value is reached by first manipulation in one direction and the second threshold value is reached by a second manipulation in the same or opposite direction.

3. A method according to claim 1 or 2, **characterized in that** one of the following components is used as the electrical component (30): rotary actuator, linear actuator, rotary potentiometer, slide potentiometer, variable capacitor, slider, pushbutton, touch-sensitive switch element.

4. A method according to one of the preceding claims, **characterized in that** a first optical and/or acoustic and/or electrical signal is output upon reaching the first threshold value and a second optical and/or acoustic and/or electrical signal is output upon reaching the second threshold value within the predeterminable time window.

5. A method according to one of the preceding claims, **characterized in that** a parameterization and/or determination of the operating mode of the electrical device (50) is carried out by rotating, displacing, pressing, touching or other manipulations of the electrical component in a predeterminable manner.

6. An electrical device (50), which comprises a circuit arrangement (40) for the activation and parameterization of an electrical device (50) and at least one electrical component (30) whose values are variable by rotating, displacing, pressing, touching or other manipulations, wherein the values are signals outputted in analog or digital form, wherein the circuit arrangement (40) comprises a threshold value device which is set up to detect reaching at least two predeterminable or predetermined threshold values which can be reached by rotating, displacing, pressing, touching or other manipulations of the electrical component (30), and wherein the circuit arrangement (40) comprises a timer circuit (41) which upon reaching the first threshold value starts a predeterminable or predetermined time window and which upon reaching the second threshold value outputs a signal within a predeterminable time window and releases a parameterization in form of a switch threshold setting and interrupts the activation upon exceeding the predeterminable or predetermined time window, if the second threshold was not reached, **characterized in that** the electronic device (50) is a sensor whose switching value is adjustable by means of the electrical component (30).

7. An electrical device (50) according to claim 6, **characterized in that** the electrical component (30) is one of the following components: rotary actuator, linear actuator, rotary potentiometer, slide potentiometer, variable capacitor, slider, pushbutton, touch-sensitive switch element.

8. An electrical device (50) according to claim 6, **characterized in that** the sensor is a proximity sensor, a distance sensor, a temperature sensor, a pressure sensor or humidity sensor, or any other sensor for detecting physical quantities.

## Revendications

1. Procédé d'activation d'un dispositif électrique (50) qui comporte au moins un composant électrique (30) dont les valeurs sont réglables mécaniquement par rotation, déplacement, pression, contact ou toute autre manipulation, les valeurs constituant des signaux électriques émis sous forme analogique ou numérique, comprenant les étapes suivantes :
- au moins une première et une deuxième valeur de seuil sont déterminées
- après que la première valeur de seuil a été atteinte par manipulation du composant électrique (30) une fenêtre temporelle démarre ;
- lorsque la deuxième valeur de seuil est atteinte par manipulation du composant électrique (30) dans la fenêtre temporelle, un signal d'activation est émis ;
- lorsque la deuxième valeur de seuil n'est pas atteinte dans la fenêtre temporelle prédéfinissable par manipulation du composant électrique (30), le processus d'activation est interrompu,
**caractérisé en ce que** le dispositif électrique (50) est un capteur dont la valeur de déclenchement est réglée au moyen du composant électrique (30).

2. Procédé selon la revendication 1, **caractérisé en ce que** la première valeur de seuil est atteinte par une première manipulation dans une direction et que la deuxième valeur de seuil est atteinte par une deuxième manipulation dans la même direction ou dans la direction opposée.

3. Procédé selon la revendication 1 ou 2, **caractérisé en ce qu'**un des composants suivants est utilisé en tant que composant électrique (30) : actuateur rotatif, actuateur linéaire, potentiomètre rotatif, potentiomètre coulissant, condensateur rotatif, curseur, stylet, élément de commutation tactile.

4. Procédé selon l'une des revendications précédentes, **caractérisé en ce que** lorsque la première valeur de seuil est atteinte, un premier signal optique et/ou sonore et/ou électrique est émis et que lorsque la deuxième valeur de seuil est atteinte dans la fenêtre temporelle prédéfinissable, un deuxième signal optique et/ou sonore et/ou électrique est émis.

5. Procédé selon l'une des revendications précédentes, **caractérisé en ce que** par rotation, déplacement, pression, contact ou toute autre manipulation du composant électrique (30) de manière prédéfinissable, un paramétrage et/ou une détermination du mode de fonctionnement du dispositif électrique (50) sont effectués.

6. Dispositif électrique (50) qui comporte un circuit (40) permettant l'activation et le paramétrage d'un dispositif électrique (50) et au moins un composant électrique (30), dont les valeurs sont réglables par rotation, déplacement, pression, contact ou toute autre manipulation, les valeurs constituant des signaux électriques émis sous forme analogique ou numérique, le circuit (40) comportant un dispositif à valeur de seuil qui est mis en place pour détecter l'obtention d'au moins deux valeurs-seuils prédéfinissables ou prédéterminées pouvant être atteintes par rotation, déplacement, pression, contact ou toute autre manipulation du composant électrique (30) et le circuit (40) présentant un circuit de temporisation (41) qui démarre une fenêtre temporelle prédéfinissable ou prédéterminée lors de l'obtention de la première valeur de seuil et qui émet un signal dans une fenêtre temporelle prédéfinissable ou prédéterminée lors de l'obtention de la deuxième valeur de seuil et qui libère un paramétrage sous forme de dispositif de seuil de commutation et qui interrompt l'activation lors du franchissement de la fenêtre temporelle prédéfinissable ou prédéterminée, lorsque la deuxième valeur de seuil n'a pas été atteinte, **caractérisé en ce que** le dispositif électrique (50) est un capteur, dont la valeur de seuil est réglable au moyen du composant électrique (30).

7. Dispositif électrique (50) selon la revendication 6, **caractérisé en ce que** le composant électrique (30) est un des composants suivants : actuateur rotatif, actuateur linéaire, potentiomètre rotatif, potentiomètre coulissant, condensateur rotatif, curseur, stylet, élément de commutation tactile.

8. Dispositif électrique (50) selon la revendication 6, **caractérisé en ce que** le capteur est un capteur de proximité, un capteur de distance, un capteur de température, un capteur de pression ou un capteur d'humidité ou un autre capteur permettant l'enregistrement de dimensions physiques.
